# EUROPEAN PATENT SPECIFICATION

(11) **EP 3 246 727 B1**
(45) Date of publication and mention of the grant of the patent: **04.03.2020**
(21) Application number: 17174082.2
(22) Date of filing: 03.01.2012
(51) Int. Cl.: G01S 7/48, G01S 3/783

(54) **LASER THREAT WARNING SYSTEM AND METHOD**
LASERBEDROHUNGWARNSYSTEM UND -VERFAHREN
SYSTÈME ET PROCÉDÉ D'AVERTISSEMENT DE MENACE PAR LASER

(30) Priority: 03.01.2011 IL 21044311; 04.07.2011 US 201161504249 P
(43) Date of publication of application: 22.11.2017
(62) Divisional of application: 12707658.6
(73) Proprietor: Elbit Systems Ltd., 31053 Haifa (IL)
(72) Inventor: David, Ofer, 34756 Haifa (IL); Yaniv, Elad, 42565 Netanya (IL); Hershman, Akiva, 32804 Haifa (IL); Shukrun, Avi, 31053 Haifa (IL)
(74) Representative: Petraz, Gilberto Luigi

(56) References cited:
- DE-C1- 3 742 773
- US-A- 4 674 874
- US-A1- 2008 002 192
- US-B1- 7 202 809

## Description

### FIELD OF THE DISCLOSED TECHNIQUE

The disclosed technique generally relates to a warning system for threats against military targets, and more particularly, to a laser-based threat warning system installed on a military vehicle.

### BACKGROUND OF THE DISCLOSED TECHNIQUE

Modern military combat involves a multitude of laser assisted weapon systems. Such systems include laser guided weapons, in which a missile or projectile is deployed against a target via a laser beam, and laser rangefinders for detecting the distance and direction of a potential target. Armored vehicles are particularly susceptible to laser assisted enemy attacks. Laser warning systems are utilized by armed forces to provide an immediate indication of laser radiation being directed at them, and to allow the swift implementation of an appropriate response to counteract the impending threat. Such warning systems generally measure and monitor various parameters associated with the incoming threat, such as the arrival direction of the threat. These parameters can then be taken into account when counteracting the threat. Considering that military personnel are often facing life-threatening circumstances, response time is of critical importance in such situations, and so the entire process, from detection of the incoming threat to implementing the counter-response, must be executed extremely rapidly, leaving virtually no time for any superfluous verification procedures or for second-guessing decision making.

If the laser warning system is sufficiently sensitive, it may also receive warnings resulting from laser transmission by a nearby friendly military force, or even from the very same military force on which the warning system is installed. Laser reflections from objects or interference in the surrounding environment may reach the laser warning system, leading to an erroneous warning of an incoming enemy threat. Certain military tank squadrons utilize a "wing-man" type of formation, similar to fighter aircrafts, where a tank is positioned beside and slightly behind the lead tank in the same unit, which further increases the likelihood of friendly laser transmission detection by the laser warning system.

PCT International Publication No. WO 2006/067781 to Elbit Systems Ltd., entitled "Laser direction detection", is directed to an apparatus for determining the presence of low power laser radiation originating from a source. A radiation sensor detects incoming radiation and converts the radiation into a digital signal. A threshold detector produces a potential threat indication when the electric signal exceeds a threshold level. A counter counts the number of potential threat indications within a certain period and produces a threat indication if the count exceeds a certain value. The apparatus further determines the angle of arrival of the radiation. A pair of radiation sensors is located at different spatial locations behind an opening. Each radiation sensor detects a respective portion of the incoming radiation, and converts the radiation into a respective electrical signal, which is integrated by an integrator. The direction of the radiation is determined based on the relative amounts of the respective integrated signals.

US Patent No. 7,202,809 to Schade et al, entitled: "Fast acting active protection system", discloses an active protection system for military vehicles which handles rocket propelled grenade (RPG) threats fired from close ranges. A plurality of passive sensors is used to locate the threat and initialize the system. A low cost radar or laser tracker is used to determine the range, velocity, and angular position of the threat.

US Patent No. 4,674,874 to Halldorsson et al, entitled: "Laser detection device", is directed to a device for detecting the presence and direction of a pulsating or intensity-modulated laser radiation. A first laser radiation detection means detects laser radiation from any of a plurality of directions and generates a start signal immediately upon incidence of the laser radiation. A second laser radiation detection means detects laser radiation from any of the plurality of directions and generates a stop signal delayed by a selected amount from the start signal depending on the direction from which the laser radiation came. The second laser radiation detection means includes optical receivers to receive the laser radiation and a detector for detecting the occurrence of the laser radiation. The delay is established by utilizing optic coupling elements or fibers of different lengths and overlapping directions of incidence, the optic coupling elements extending from the optic receivers to the detector.

DE3742773 discloses methods and apparatus of measuring the angle of an incident laser beam using three cylindrical bodies having sensing windows of constant width.

### SUMMARY OF THE DISCLOSED TECHNIQUE

The invention is defined by a laser threat warning system as defined in independent claim 1 and a corresponding method as defined in independent claim 7. Further embodiments are defined in the dependent claims.

### BRIEF DESCRIPTION OF THE DRAWINGS

The disclosed technique will be understood and appreciated more fully from the following detailed description taken in conjunction with the drawings in which:
Figure 1 is a schematic illustration of a laser threat warning system, constructed and operative in accordance with an embodiment of the disclosed technique;
Figure 2 is a top view schematic illustration of an armored military vehicle installed with the laser threat warning system of Figure 1;
Figure 3 is a flow diagram of a method for detecting, identifying, characterizing and responding to a laser threat, operative in accordance with an embodiment of the disclosed technique;
Figure 4 is a flow diagram of a method for filtering ambient light noise by dynamically adjusting a noise threshold level based on detected ambient light conditions, operative in accordance with an embodiment of the disclosed technique;
Figure 5 is a flow diagram of a method for filtering ambient light noise based on correlation criteria of the timing of received laser radiation by separate (hit) laser detectors, operative in accordance with an embodiment of the disclosed technique;
Figure 6 is a schematic illustration of the operation of a laser threat warning system with non-threat identification capabilities, constructed and operative in accordance with an embodiment of the disclosed technique;
Figure 7 is a flow diagram of a method for filtering received laser radiation transmitted by a non-threat source, operative in accordance with an embodiment of the disclosed technique;
Figure 8 is a flow diagram of a method for identifying and characterizing threats based on pulse mappings of the received laser radiation, operative in accordance with an embodiment of the disclosed technique; and
Figure 9 is a flow diagram of a method for determining threat direction based on where received laser radiation arrived first from among multiple (hit) laser detectors, operative in accordance with an embodiment of the disclosed technique.

### DETAILED DESCRIPTION OF THE EMBODIMENTS

The disclosed technique overcomes the disadvantages of the prior art by providing a laser threat warning system and method which quickly and effectively filters noise and irrelevant detections, while identifying and characterizing an incoming laser-based threat, allowing an appropriate response to be taken against the threat.

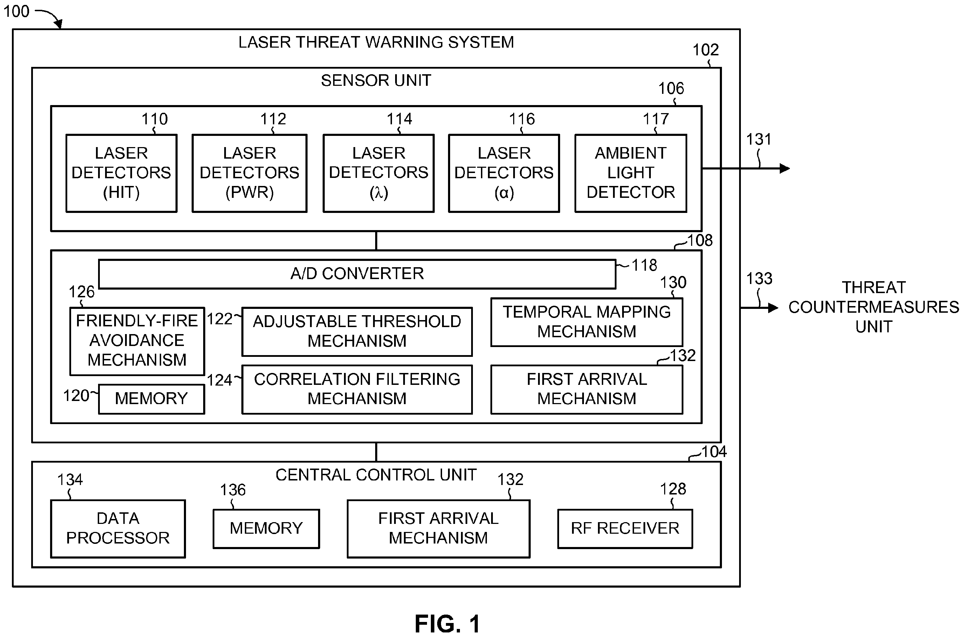

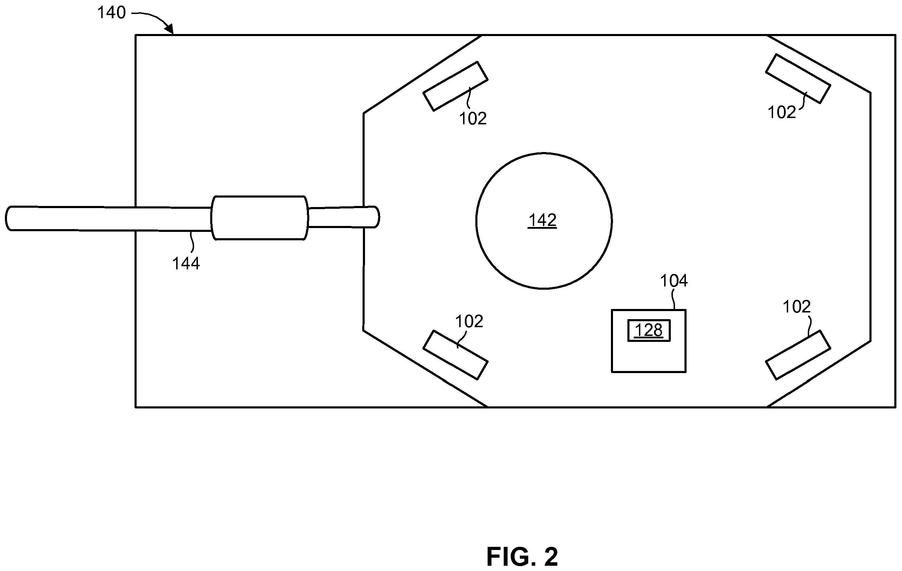

Reference is now made to Figures 1 and 2. Figure 1 is a schematic illustration of a laser threat warning system, generally referenced 100, constructed and operative in accordance with an embodiment of the disclosed technique. Figure 2 is a top view schematic illustration of an armored military vehicle, generally referenced 140, installed with the laser threat warning system of Figure 1. Laser threat warning system (LTWS) 100 includes a sensor unit 102 and a central control unit 104. Sensor unit 102 is coupled with central control unit 104. Sensor unit 102 includes a detector module 106 and a processing module 108. Detector module 106 is coupled with processing module 108. Detector module 106 includes a plurality of impact recognition ("hit") laser detectors 110, a plurality of power laser detectors 112, a plurality of spectral laser detectors 114, a plurality of angle of arrival laser detectors 116, and an ambient light detector 117. Processing module 108 includes an analog to digital (A/D) converter 118, a memory 120, an adjustable threshold mechanism 122, a correlation filtering mechanism 124, a friendly-fire avoidance mechanism 126, a temporal mapping mechanism 130, and a first arrival mechanism 132. Central control unit 104 includes a radio frequency (RF) receiver 128, a first arrival mechanism 132, a data processor 134, and a memory 136. Detector module 106 communicates with processing module 108, with central control unit 104, or with an external system unit through a broadband communication interface 131, such as an Ethernet communication link. LTWS 100 is coupled with a threat countermeasures unit via link 133. Adjustable threshold mechanism 122, correlation filtering mechanism 124, friendly-fire avoidance mechanism 126, temporal mapping mechanism 130, and first arrival mechanism 132 may each be embodied by at least one hardware device, at least one software module, or a combination thereof, and may each be part of a general hardware device or software module (e.g., in processing module 108), or may be a dedicated hardware device or software module. Processing module 108 is generally embodied by an integrated circuit, such as a field-programmable gate array (FPGA). Sensor unit 102 and central control unit 104 are each generally housed within a single housing. It is appreciated that Figure 1 represents an exemplary configuration of the laser threat warning system of the disclosed technique, and any of the components of LTWS 100 may be disposed or embodied in an alternative manner. For example, ambient light detector 117 may be integrated with at least one of the laser detectors 110, 112, 114 or 116. It is further noted that some of the components of LTWS 100 depicted in Figure 1 may be optional. For example, LTWS 100 may include only some types of laser detectors 110, 112, 114 or 116, or alternative equivalent laser detectors.

With reference to Figure 2, sensor units 102 are arranged along the outer perimeter of armored military vehicle 140, substantially equidistantly spaced apart, such that the coverage area of all of the detector modules 106 together encompasses the entire surrounding area (i.e., providing 360° field of coverage). For example, each detector module 106 faces and receives incoming radiation from a respective corner of armored military vehicle 140. It is noted that each detector module 106 may include any number of laser detectors of each type. In an exemplary embodiment of LTWS 100, detector module 106 includes four hit detectors 110, four power detectors 112, four spectral detectors 114, four angle of arrival detectors 116, and a single ambient light detector 117.

Armored military vehicle 140 may be, for example, a battle tank, an armored car, an armored personnel carrier, and the like. Central control unit 104 is disposed at a suitable location on the upper exterior of armored military vehicle 140, such as off to one side, near the turret 142. Armored military vehicle 140 further includes an external threat countermeasures unit, which may be partially embodied by main gun 144.

In general, when an enemy military force activates a laser assisted weapon system directed toward armored military vehicle 140, at least one detector module 106 detects the incoming laser radiation (via laser detectors 110, 112, 114 and 116). LTWS 100 processes the detected laser radiation, and filters out noise and other extraneous input, using at least one filtering mechanism (e.g., adjustable threshold mechanism 122, correlation filtering mechanism 124, friendly-fire avoidance mechanism 126). LTWS 100 determines whether the detected laser radiation originated from an incoming laser based threat (e.g., a laser guided missile), using at least one threat identification mechanism (e.g., temporal mapping mechanism 130, first arrival mechanism 132). If the detected laser radiation is deemed to not be from a threat, then it is ignored (i.e., no further action is taken). If however a threat is positively identified, LTWS 100 proceeds to characterize the threat, determine additional information associated with the threat, and then to respond to the threat in an optimal manner.

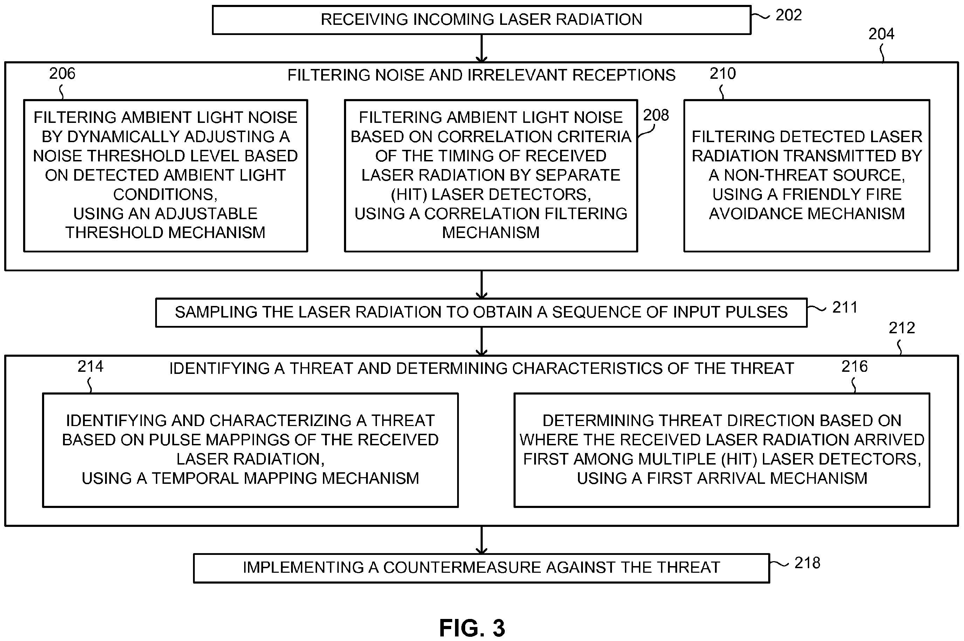

Reference is now made to Figure 3, which is a flow diagram of a method for detecting, identifying, characterizing and responding to a laser threat, operative in accordance with an embodiment of the disclosed technique. In procedure 202, incoming laser radiation is received. With reference to Figures 1 and 2, laser detectors 110, 112, 114 and 116 of sensor units 102 on armored military vehicle 140 detect incoming laser radiation.

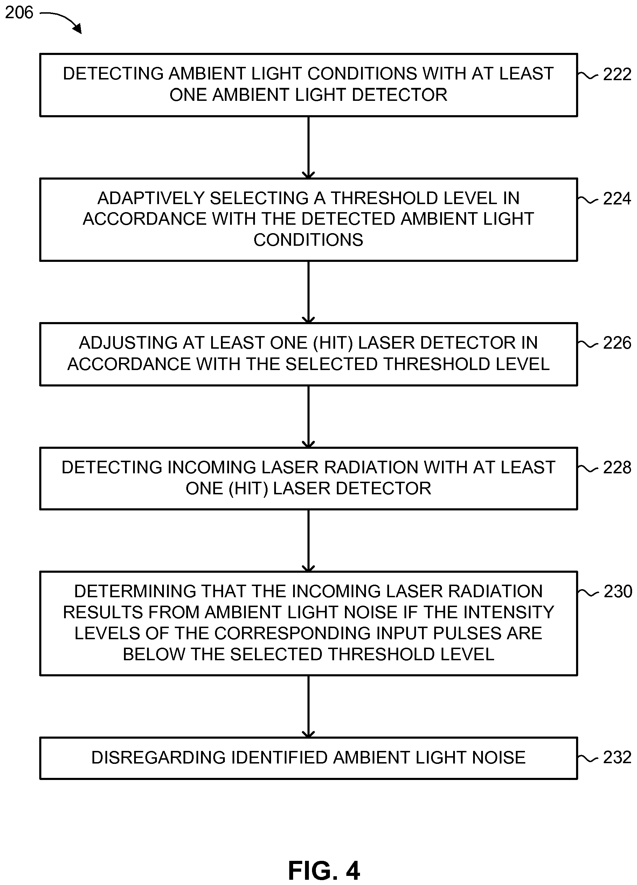

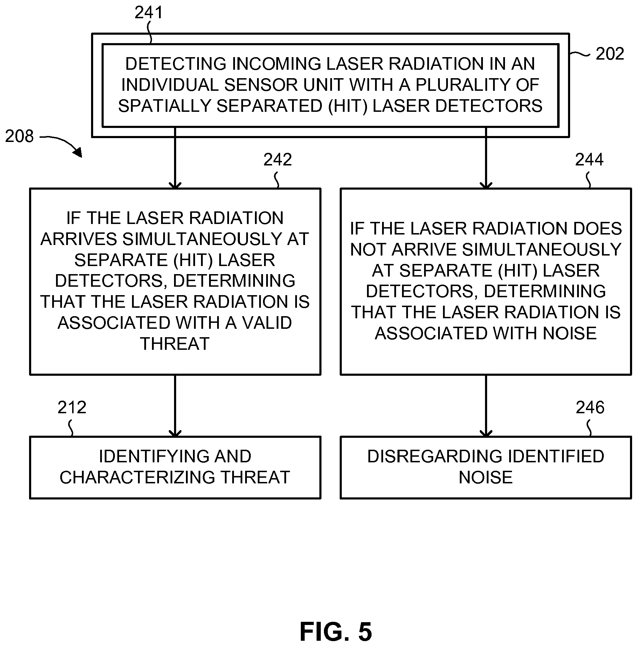

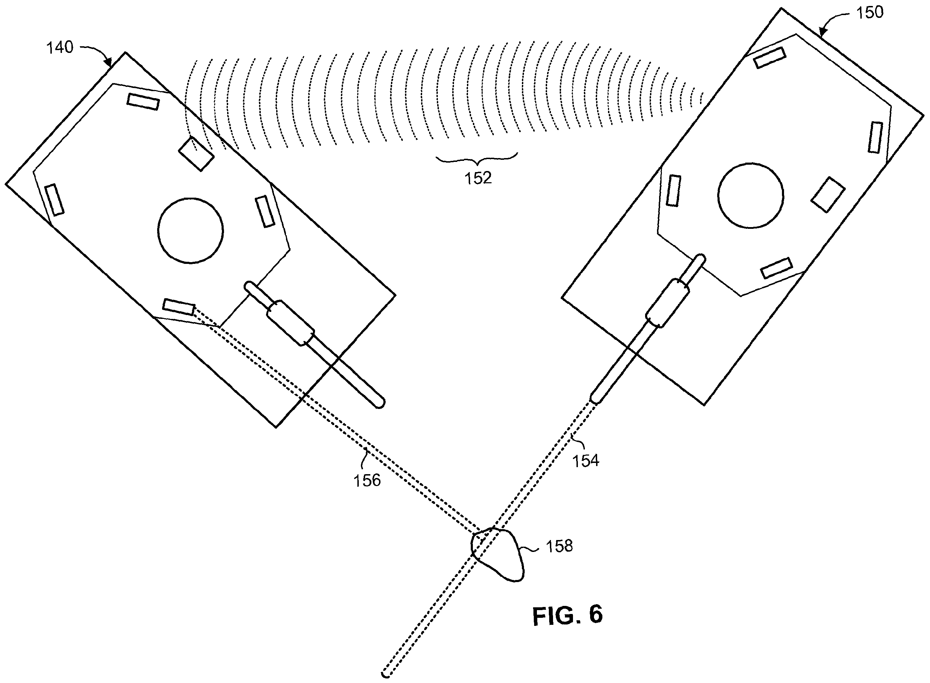

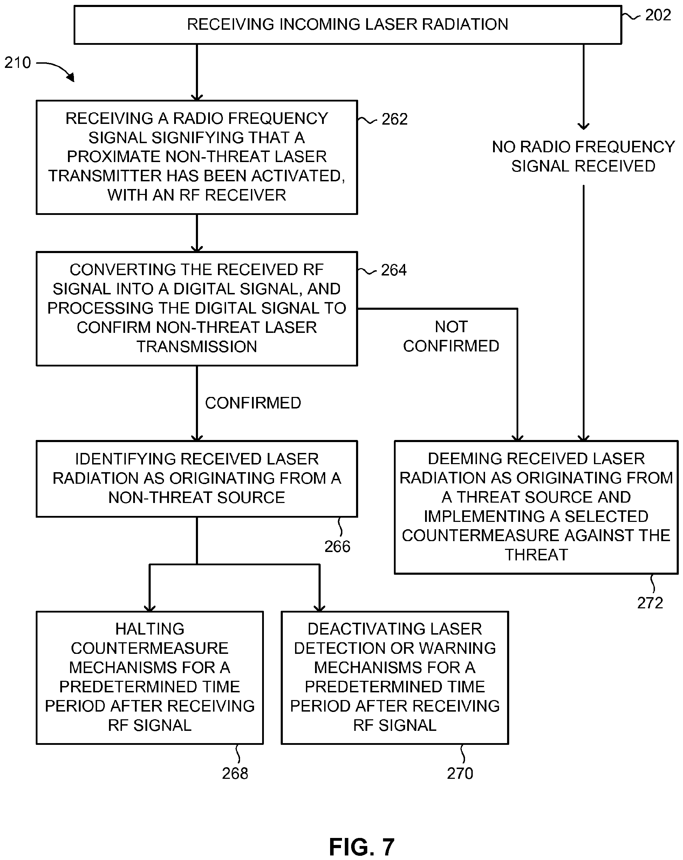

In procedure 204, noise and irrelevant receptions are filtered out. Procedure 204 may be implemented by three separate and mutually inclusive procedures. In procedure 206, ambient light noise is filtered by dynamically adjusting a noise threshold level based on detected ambient light conditions, using an adjustable threshold mechanism. With reference to Figure 1, adjustable threshold mechanism 122 filters ambient light noise received by detector module 106, as further elaborated upon herein below in Figure 4. In procedure 208, ambient light noise is filtered based on correlation criteria of the timing of received laser radiation by separate laser detectors, using a correlation filtering mechanism. With reference to Figure 1, correlation filtering mechanism 124 filters ambient light noise received by detector module 106, as further elaborated upon herein below in Figure 5. In procedure 210, laser radiation transmitted by a non-threat source is filtered, using a friendly-fire avoidance mechanism. With reference to Figure 1, friendly-fire avoidance mechanism 126 filters laser radiation received by detector module 106 transmitted by non-threat sources (e.g., by a nearby friendly armoured military vehicle), as further elaborated upon herein below in Figures 6 and 7.

In procedure 211, the laser radiation is sampled to obtain a sequence of input pulses. With reference to Figure 1, each activated laser detector 110, 112, 114, 116 samples the laser radiation to generate a sequence of input pulses, which are converted into corresponding digital signals via A/D converter 118.

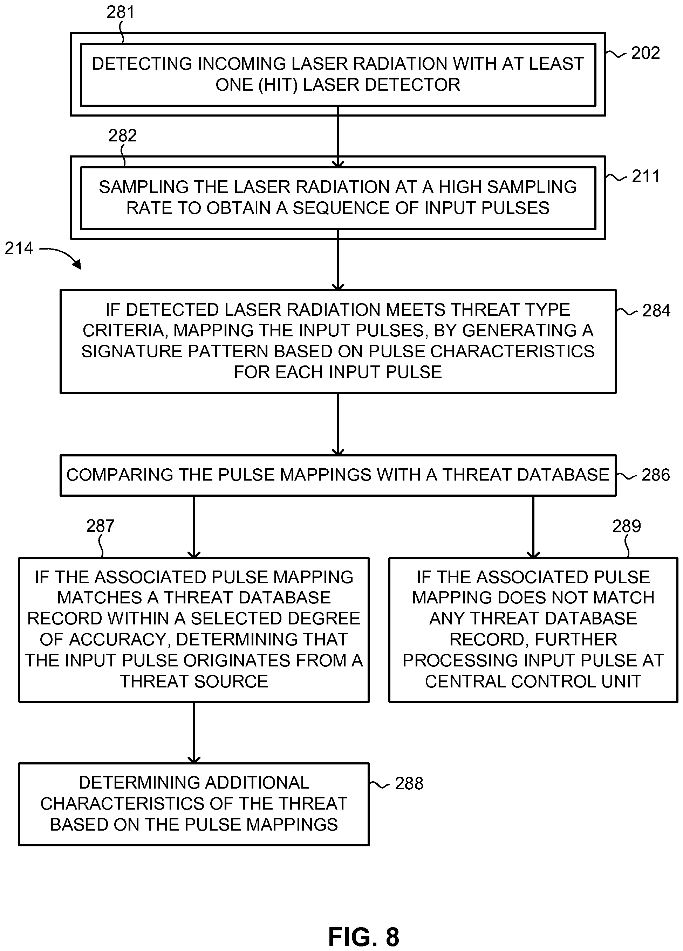

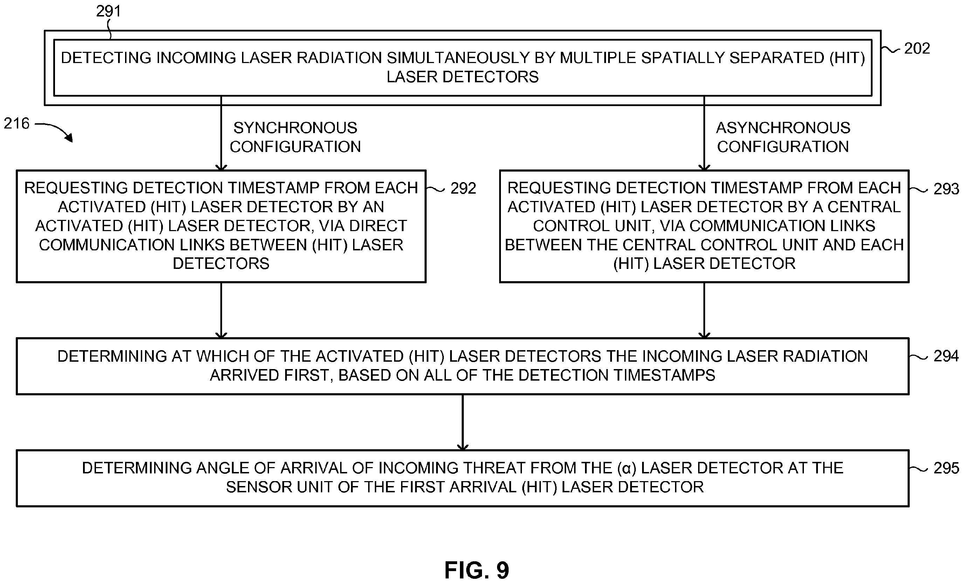

In procedure 212, a threat is identified and characteristics of the threat are determined. Procedure 212 may be implemented by two separate and mutually inclusive procedures. In procedure 214, the threat is identified and characterized based on pulse mappings of the received laser radiation, using a temporal mapping mechanism. With reference to Figure 1, temporal mapping mechanism 130 identifies and characterizes the threat using pulse mappings, as further elaborated upon herein below in Figure 8. In procedure 216, the threat direction is determined based on where the received laser radiation arrived first among multiple (hit) laser detectors, using a first arrival mechanism. With reference to Figure 1, when multiple hit laser detectors 110 of detector module 106 receive radiation simultaneously, first arrival mechanism 132 determines at which hit laser detector 110 the radiation arrived initially (i.e., however briefly before reaching the other hit laser detectors 110), which is then used to determine the angle of arrival of the threat, as further elaborated upon herein below in Figure 9.

In procedure 218, a countermeasure is implemented against the threat. With reference to Figures 1 and 2, LTWS 100 activates the threat countermeasures unit to disable or misdirect the threat, such as by transmitting a decoy signal in an appropriate frequency to cause the laser-guided missile to change its trajectory (i.e., a "soft-kill countermeasure"), or by striking and destroying the threat, such as by firing a weapon at the incoming missile (i.e., a "hard-kill countermeasure").

In accordance with an aspect of the disclosed technique, LTWS 100 filters ambient light noise received by detector module 106 using adjustable threshold mechanism 122. Reference is now made to Figure 4, which is a flow diagram of a method for filtering ambient light noise by dynamically adjusting a noise threshold level based on detected ambient light conditions, operative in accordance with an embodiment of the disclosed technique. The method of Figure 4 corresponds to procedure 206 of Figure 3.

In procedure 222, ambient light conditions are detected with at least one ambient light detector. With reference to Figures 1 and 2, ambient light detector 117 receives ambient light from the area surrounding armored military vehicle 140. The amount or intensity of light received by ambient light detector 117 may be a function of the time of day, season, climate, topography, geography, and various other factors. For example, ambient light detector 117 will clearly detect less light during the night than during the day. Ambient light detector 117 may be embodied by a photodetector (e.g., a photodiode) or any other type of sensor operative to detect light in the visible range. It is noted that the term "ambient light" as used herein is not limited only to sunlight or naturally occurring light, but also encompasses other types of "false" light sources (i.e., other than laser radiation). For example, ambient light may result from an electromagnetic light source, such as a flashlight.

In procedure 224, a threshold level is adaptively selected in accordance with the detected ambient light conditions. With reference to Figure 1, adjustable threshold mechanism 122 receives detected ambient light input from ambient light detector 117 in real-time, and determines a threshold level for light intensity below which the received radiation is disregarded (i.e., considered to be "noise"). The threshold level is continuously updated in real-time based on the updated readings of ambient light detector 117.

In procedure 226, at least one hit laser detector is adjusted in accordance with the selected threshold level. With reference to Figures 1 and 2, LTWS 100 alters the sensitivity of at least one hit laser detector 110 in at least one sensor unit 102, to match the selected threshold level. In particular, laser detector 110 is configured to allow input (i.e., to detect the radiation and activate A/D converter 118) if the intensity level of the incoming laser radiation is above the selected threshold level, and to disallow input (i.e., A/D converter 118 is not activated) if the intensity level of the incoming laser radiation is below the selected threshold level. For example, during the night, the sensitivity of laser detector 110 may be set to be much greater, and thereby provide for quicker detection (and subsequent threat identification and characterization), than during the day, since the level of ambient light is much lower during the night. It is noted that any number of sensor units 102 may be adjusted based on the selected threshold level (i.e., not necessarily all of them). Adjustable threshold mechanism 122 enables LTWS 100 to maintain effective detection and identification of threats, without being restricted to a threshold level associated with a "worst-case" ambient light scenario (e.g., in the middle of the day, in arid terrain, when extremely sunny, and the like) in order to avoid the mistaken detection of noise (i.e., input pulses resulting from ambient light).

In procedure 228, incoming laser radiation is detected with at least one hit laser detector. With reference to Figures 1 and 2, hit laser detector 110 detects and ascertains the presence of laser radiation in the vicinity of armored military vehicle 140.

In procedure 230, the incoming laser radiation is determined to result from ambient light noise if the intensity levels of the corresponding input pulses are below the selected threshold level. With reference to Figures 1 and 2, adjustable threshold mechanism 122 processes the input pulses (corresponding to laser radiation received by laser detector 110) and if the intensity level of the pulses are below the current selected threshold level, the input pulses are considered to result from ambient light and are disregarded. For example, the threshold level may be selected at a value that is between the mean intensity level of a valid threat-based input pulse (i.e., not resulting from noise) and the mean intensity level of a noise-based input pulse during current ambient light conditions. This ensures that the number of false positives (i.e., noise-based input pulses mistakenly identified as threat-based input pulses) is maintained sufficiently low, while enabling effective detection of true positives (i.e., actual threat-based input pulses). For example, during the night, the level of ambient light is minimal, which allows the utilization of a lower threshold level to provide effective detection of actual threat inputs (i.e., not noise) while maintaining the same degree of accurate noise filtering.

In procedure 232, identified ambient light noise is disregarded. With reference to Figure 1, LTWS 100 disregards input pulses having an intensity level below the selected threshold level. It is noted that the threshold selection and other processing may be implemented based on either the analog signal (i.e., of the detected radiation) or the digital signal (i.e., the corresponding pulses generated by A/D converter 118).

In accordance with another aspect of the disclosed technique, LTWS 100 filters ambient light noise received by detector module 106 using correlation filtering mechanism 124. Reference is now made to Figure 5, which is a flow diagram of a method for filtering ambient light noise based on correlation criteria of the timing of received laser radiation by separate (hit) laser detectors, operative in accordance with an embodiment of the disclosed technique. The method of Figure 5 corresponds to procedure 208 of Figure 3.

In procedure 241, incoming laser radiation is detected in an individual sensor unit with a plurality of spatially separated hit laser detectors. With reference to Figures 1 and 2, for an individual sensor unit 102, at least two separate hit laser detectors 110 detect and ascertain the presence of laser radiation in the vicinity of armored military vehicle 140.

In procedure 242, if the laser radiation arrives simultaneously at separate hit laser detectors, then the laser radiation is determined to be associated with a valid threat. The term "simultaneous", and grammatical variations thereof, as used herein is not limited to events occurring at exact or precise concurrence, but may involve suitable deviations and time overlaps, and thus also encompasses a brief period of time before and/or a brief period of time after the duration under consideration. Accordingly, if a first event is described as being performed "simultaneously" to a second event, then at least a portion of the first event may also occur, e.g., immediately before, immediately after, and/or during the second event. With reference to Figures 1 and 2, correlation filtering mechanism 124 examines the precise time (i.e., the "timestamp") at which the radiation was detected by each hit laser detector 110. In particular, the corresponding digital signals from each of the activated hit laser detectors 110 is input into a comparator (not shown), and then correlation filtering mechanism 124 determines the synchronization of the comparator output (e.g., by multiplying the two signals). If the timestamps of the activated laser detectors 110 are within a predetermined time interval, signifying that the radiation arrived at all activated laser detectors 110 simultaneously, then that laser radiation is considered to result from a valid laser-based threat. The laser radiation from an incoming threat will necessarily reach multiple (and usually all) laser detectors 110 of a sensor unit 102 essentially simultaneously as the radiation is propagating at the speed of light.

In procedure 244, if the laser radiation does not arrive simultaneously at the separate hit laser detectors, then the laser radiation is determined to be associated with noise. With reference to Figures 1 and 2, correlation filtering mechanism 124 examines the timestamp of each hit laser detector 110. In particular, the corresponding digital signals from each of the activated hit laser detectors 110 is input to the comparator (not shown), and then correlation filtering mechanism 124 determines the synchronization of the comparator output (e.g., by multiplying the two signals). If the timestamps of the activated hit laser detectors 110 are not within a predetermined time period, signifying that the radiation did not arrive at all activated laser detectors 110 simultaneously, then that laser radiation is considered to result from noise. The laser radiation from an incoming threat will necessarily reach multiple laser detectors 110 of a sensor unit 102 essentially simultaneously, whereas radiation due to noise, such as ambient light, is highly unlikely to be received simultaneously by different spatially separated detectors because noise is temporally random and because each noise signal influences each detector differently (due to physical differences among detectors).

If the timing of the received laser radiation by separate sensor units 102 is correlated (i.e., the laser radiation arrived at all the activated laser detectors 110 simultaneously), and the laser radiation is determined to be associated with a valid threat, then the radiation is sampled and processed to identify and characterize the threat (procedure 212 of Figure 3).

If the timing of the received laser radiation by separate sensor units 102 is not correlated (i.e., the laser radiation arrived at all the activated laser detectors 110 simultaneously), and the laser radiation is determined to be associated with noise, then in procedure 246, the identified noise is disregarded. With reference to Figure 1, LTWS 100 disregards received laser radiation that is considered to result from noise.

It is noted that the correlation timing processing of the incoming radiation may be implemented based on either the analog signal (i.e., of the detected radiation) or the digital signal (i.e., the corresponding pulses generated by A/D converter 118). The comparisons of arrival times at separate laser detectors may be implemented using standard comparators.

In accordance with a further aspect of the disclosed technique, when a friendly military force in the vicinity of armored military vehicle 140 activates a laser assisted weapon system (e.g., directed toward an enemy military force), the friendly military force provides a notification to armored military vehicle 140, in order to prevent the mistaken detection of "friendly fire" as an incoming enemy threat. Accordingly, the friendly military force transmits an RF signal, modulated in accordance with predetermined signal criteria, to provide the notification. RF receiver 128 receives the transmitted RF signal, and converts the RF signal into a corresponding digital signal (e.g., using an A/D converter not shown). Processing module 108 processes the digital signal, and if the predetermined signal criteria are identified, determines that a friendly military force has activated a laser assisted weapon system in the vicinity of LTWS 100. LTWS 100 is then aware that specific laser radiation which was detected within a brief time period before receiving the RF signal (e.g., within 200ms), is due to a friendly military force, and will proceed to operate accordingly. For example, LTWS 100 may deactivate all predetermined types of laser detection or warning mechanisms for the specified time interval (e.g., by deactivating detector module 106), or alternatively, halting all countermeasure mechanisms for the specified time interval (e.g., by deactivating the threat countermeasures unit via link 131). Once the predetermined time period has elapsed, LTWS 100 resets and proceeds to respond to any subsequent incoming laser-based threats as usual. It is appreciated that the entire duration of the notification process is very brief (e.g., approximately 200ms), allowing LTWS 100 to successfully identify the laser-based threat and implement an appropriate countermeasure if necessary, within the time constraints involved (especially when dealing with close range threats). The predetermined signal criteria utilized in the RF signal may involve specific amplitude, frequency, phase, or pulse width values, and may include any general type of modulation technique known in the art, such as coded pulse transmission. The RF signal may also be encrypted, to prevent being interpreted by enemy forces if intercepted. RF receiver 128 may also include transmission capabilities (i.e., may be an RF transceiver), for transmitting a similar RF signal to a neighboring friendly military force for notification of its own laser threat deployment. It is appreciated that LTWS 100 may alternatively employ separate RF transmitter and RF receiver components. RF receiver 128 may alternatively be integrated with friendly-fire avoidance mechanism 126. RF receiver 128 may include filters, amplifiers, or other electronic components (not shown) for enabling suitable processing of the detected RF signal. It is appreciated that the notification signal may alternatively be another type (i.e., not necessarily RF) and in other frequency ranges in the electromagnetic spectrum. For example, LTWS 100 may include an optical transceiver, rather than an RF transceiver, for receiving and transmitting an optical notification signal.

Reference is now made to Figure 6, which is a schematic illustration of the operation of a laser threat warning system with non-threat identification capabilities, constructed and operative in accordance with an embodiment of the disclosed technique. Armored military vehicles 140 and 150 are friendly military forces, each installed with a friendly-fire avoidance mechanism equivalent to friendly-fire avoidance mechanism 126 (Figure 1). Armored military vehicle 150 emits laser radiation 154 toward an enemy target, in conjunction with the deployment of a laser assisted weapon system. Immediately following (e.g., a few microseconds after the laser radiation is emitted), armored military vehicle 150 transmits an RF notification signal 152. Alternatively, armored military vehicle 150 may transmit RF notification signal 152 immediately prior to emitting laser radiation 154, or substantially simultaneously thereto. Armored military vehicle 140 in the immediate vicinity of armored military vehicle 150 receives the transmitted signal 152, and decodes the signal as outlined hereinabove, obtaining an indication of a laser-based threat deployment by a friendly force. A sensor unit 102 on armored military vehicle 140 receives reflected radiation 156, arising from the incidence of laser radiation 154 with an interference source 158. Interference source 158 may be any object or entity in the environment, such as a rock, a tree, a cloud, dust, smoke, rain, snow, atmospheric particulate, haze, and the like, which results in the emitted laser radiation 154 being reflected back as reflected radiation 156 toward armored military vehicle 140. It is noted that reflected radiation 156 may undergo multiple reflections or refractions before reaching the laser detectors of armored military vehicle 140. The friendly-fire avoidance mechanism of armored military vehicle 140 recognizes the received radiation 156 as arriving from a friendly military source, due to the received RF notification signal 152 concurrent to the received laser radiation, and proceeds accordingly. An unwanted warning and countermeasure implementation against friendly armored military vehicle 150 is thereby avoided.

A military unit (e.g., a platoon, a battalion, a squadron, a regiment, a brigade, and the like) may employ a group of armored military vehicles, each of which are installed with a laser threat warning system with non-threat identification capabilities (using friendly-fire avoidance mechanism 126). In this manner, each armored military vehicle in the group is capable of notifying/receiving a notification to/from other armored military vehicles in the group, regarding friendly laser assisted weapon system deployment. In accordance with an embodiment of the disclosed technique, a plurality of military groups employs friendly-fire avoidance mechanism 126, where each group has their own associated encryption or signal criteria for the RF notification signal 152. A particular armored military vehicle may be provided with only notification receiving capabilities (i.e., the friendly-fire avoidance mechanism includes only an RF receiver), such as if that vehicle does not include laser assisted weapon system capabilities. Alternatively, a particular armored military vehicle may be provided with only notification transmission capabilities (i.e., the friendly-fire avoidance mechanism includes only an RF transmitter). RF receiver 128 (Figure 1) generally includes both transmission and reception capabilities. LTWS 100 may also be directed to operate in a "standby mode", in which the non-threat identification mechanisms (e.g., friendly-fire avoidance mechanism 126) are switched off for a specified time interval.

It should be noted that RF notification signal 152 may generally be transmitted to a friendly armored military vehicle to signify the upcoming transmission of any type of electromagnetic radiation that can be mistakenly detected as being associated with a threat, i.e., not necessarily to signify laser radiation in particular (e.g., in conjunction with the deployment of a laser assisted weapon system). For example, armored military vehicle 150 may transmit an RF notification signal 152 to signify the deployment of artillery fire. Armored military vehicle 140 receives and decodes the transmitted signal 152 to obtain an indication that the recent artillery fire, and any associated radiation detected thereby, resulted from a friendly force rather than a potential enemy threat source.

Reference is now made to Figure 7, which is a flow diagram of a method for filtering received laser radiation transmitted by a non-threat source, operative in accordance with an embodiment of the disclosed technique. The method of Figure 7 corresponds to procedure 210 of Figure 3.

In procedure 262, an RF signal signifying that a proximate non-threat laser transmitter has been activated, is received with an RF receiver. With reference to Figures 1 and 6, RF receiver 128 of central control unit 104 receives RF notification signal 152 transmitted from armored military vehicle 150.

In procedure 264, the received RF signal is converted into a digital signal and processed to confirm non-threat laser transmission. With reference to Figures 1 and 6, RF receiver 128 converts the received RF notification signal 152 into a digital signal, which is processed by friendly- fire avoidance mechanism 126.

If a non-threat laser transmission is confirmed, then in procedure 266, the received laser radiation is identified as originating from a non-threat source. With reference to Figures 1 and 6, if friendly-fire avoidance mechanism 126 identifies predetermined signal criteria (e.g., relating to the amplitude, frequency, phase, pulse width, and the like) in the RF notification signal 152, then friendly-fire avoidance mechanism 126 determines that incoming laser radiation 156 originated from a non-threat source (i.e., armored military vehicle 150).

In procedure 268, countermeasure mechanisms are halted for a predetermined time period after receiving the RF signal. With reference to Figures 1 and 6, LTWS 100 halts or deactivates the threat countermeasures unit (via link 131) or associated system components for a brief time period after receiving RF notification signal 152.

In procedure 270, laser detection or warning mechanisms are deactivated for a predetermined time period after receiving the RF signal. With reference to Figures 1 and 6, LTWS 100 deactivates detector module 106 or associated system warning components for a brief time period after receiving RF notification signal 152. It is noted that procedures 268 and 270 may be performed independently of one another, or in combination. Alternatively, LTWS 100 may implement a different response after the identification of a laser-based threat deployment from a non-threat source.

If a non-threat laser transmission is not confirmed, then in procedure 272, the received laser radiation is deemed as originating from a threat source and a selected countermeasure is implemented against the threat. With reference to Figures 1 and 6, if friendly-fire avoidance mechanism 126 fails to identify predetermined signal criteria (e.g., relating to the amplitude, frequency, phase, pulse width, and the like) in the RF notification signal 152, or alternatively if no RF notification signal is received at all, then LTWS 100 determines that incoming laser radiation originated from a threat source (not shown), and activates the threat countermeasures unit against the impending threat.

In accordance with yet another embodiment of the disclosed technique, LTWS 100 identifies and characterizes incoming laser-based threats using temporal mapping mechanism 130. Reference is now made to Figure 8, which is a flow diagram of a method for identifying and characterizing threats based on pulse mappings of the received laser radiation, operative in accordance with an embodiment of the disclosed technique. The method of Figure 8 corresponds to procedure 214 of Figure 3.

In procedure 281, incoming laser radiation is detected, using at least one (hit) laser detector. With reference to Figures 1 and 2, hit laser detector 110 detects and ascertains the presence of laser radiation in the vicinity of armored military vehicle 140.

In procedure 282, the laser radiation is sampled at a high sampling rate to obtain a sequence of input pulses. With reference to Figure 1, hit laser detector 110 samples the laser radiation at a particular high sampling rate, to generate a sequence of input pulses, which are converted into corresponding digital signals via A/D converter 118. The term "high sampling rate" refers to a sampling rate that is generally higher than standard laser detector pulse sampling rates.

In procedure 284, if the detected laser radiation meets threat type criteria, the input pulses are mapped by generating a signature pattern based on pulse characteristics for each input pulse. With reference to Figure 1, some of the hit laser detectors 110 of a sensor unit 102 filter out received radiation that correspond to certain threat types. For example, a set of hit laser detectors 110 block input associated with laser rangefinders (LRF) or laser designators, while passing through input associated with beam-riding guiding missiles. In addition, each laser detector 110 may include a specific spectral filter operative for filtering out certain wavelengths. The isolation of particular types of input may be realized via the amplifier or filter bandwidth of the laser detectors 110. It is appreciated that the laser detectors of detector module 106 may alternatively pass through all received laser radiation for processing. If the detected radiation is not filtered out, temporal mapping mechanism 130 processes the input pulses (corresponding to laser radiation received by laser detector 110) and generates a temporal mapping of each pulse. The mapping includes a model of characteristics of the pulse as a function of time, such as frequency, amplitude, intensity, modulation, and the like. The mapping for example may be embodied by a plurality of graphs or tables of variable pulse characteristics.

In procedure 286, the pulse mappings are compared with a threat database. With reference to Figure 1, memory 120 includes a previously stored database of information associating different types of threats with signal characteristics. For example, the database may include pulse characteristics (e.g., frequency, amplitude, intensity, modulation, and the like) as a function of time, for different laser-based threats. Temporal mapping mechanism 130 compares the generated pulse mapping of each input pulse with the contents of the threat database. A copy of the threat database may also be stored in memory 136 of central control unit 104.

In procedure 287, it is determined that the input pulse originates from a threat source if the associated pulse mapping matches a threat database record within a selected degree of accuracy. With reference to Figure 1, if temporal mapping mechanism 130 identifies a record in the threat database (i.e., information associated with a particular laser-based threat) that matches a pulse mapping or a sequence of consecutive pulse mappings, then that particular threat is identified as having initiated the received laser radiation. A match may be ascertained if a predetermined number of characteristics of the pulse mapping are within a predetermined margin of the corresponding characteristics of the threat in the database record. It is noted that the threat database may also include information associated with different types of expected noise signals (e.g., commonly expected to arise). Accordingly, temporal mapping mechanism 130 may utilize the threat database to determine that the received laser radiation resulted from a particular type of noise, if the pulse mapping characteristics matches the associated characteristics of a noise record in the database. Once a threat is identified, LTWS 100 proceeds to characterize the incoming threat and determine real-time information (e.g., speed, range, location and direction of the threat) and to prepare implementation of an appropriate countermeasure. It is noted that the processing and mapping of the incoming radiation may be implemented based on either the analog signal (i.e., of the detected radiation) or the digital signal (i.e., the corresponding pulses generated by A/D converter 118).

In procedure 288, additional characteristics of the threat are determined based on the pulse mappings. With reference to Figure 1, the threat database (in memory 120 or memory 136) includes different information associated with the threat, such as the type of laser source used (e.g., diode or solid-state), the type of threat, the severity of the threat, possible enemy sources, options for response, and the like. Accordingly, once an incoming threat is positively identified, temporal mapping mechanism 130 identifies further information associated with the incoming threat that appears in the database record for that threat. This information is then used by LTWS 100 to help determine an appropriate countermeasure to implement against the threat.

It is noted that the identification and classification of the threat may be implemented by a separate mechanism (i.e., other than temporal mapping mechanism 130). For example, a separate threat classification mechanism may be associated with different threat types. Each threat classification mechanism may be embodied by individual or multiple hardware devices and/or software modules.

It is further noted that temporal mapping mechanism 130 allows for the detection of multiple threats directed at LTWS 100 simultaneously, as the decision regarding threat type generally requires only a few milliseconds.

In procedure 289, the input pulse is further processed at the central control unit if the associated pulse mapping does not match any threat database record. With reference to Figure 1, if temporal mapping mechanism 130 fails to identify any record in the database (i.e., information associated with a particular laser-based threat) that matches a pulse mapping (or a sequence of consecutive pulse mappings), then the input pulse is forwarded to central control unit 104 for additional processing (e.g., to identify whether it is associated with a threat, and if so what type of threat).

In accordance with yet a further embodiment of the disclosed technique, LTWS 100 determines at which laser detector the radiation arrived initially when multiple laser detectors are activated simultaneously, using first arrival mechanism 132. Reference is now made to Figure 9, which is a flow diagram of a method for determining threat direction based on where received laser radiation arrived first from among multiple (hit) laser detectors, operative in accordance with an embodiment of the disclosed technique. The method of Figure 9 corresponds to procedure 216 of Figure 3.

In procedure 291, incoming laser radiation is detected simultaneously by multiple spatially separated (hit) laser detectors. With reference to Figures 1 and 2, different hit laser detectors 110 of multiple (i.e., at least two) sensor units 102 are activated simultaneously (e.g., within a predetermined time period of one another) due to the presence of laser radiation in the vicinity of armored military vehicle 140. Generally, laser radiation from an incoming threat will reach multiple sensor units 102 at almost the same time. It is noted that laser detectors 110 optionally filter out received radiation that correspond to certain threat types, as described hereinabove (Figure 8). For example, a laser detector 110 blocks input associated with infrared (IR) radiation, while passing through input associated with laser rangefinders (LRF), which typically involve a single pulse that is very brief in duration (and is therefore likely to arrive simultaneously at multiple sensor units 102). Accordingly, a laser detector 110 is considered activated only if it passes through (i.e., does not filter) the detected radiation.

Laser detectors 110 of different sensor units 102 may be communicatively coupled in either "synchronous" or "asynchronous" configurations. In a synchronous configuration, each laser detector 110 is linked with every other laser detector 110 of LTWS 100, and can transmit/receive data directly to/from other laser detectors. In an asynchronous configuration, laser detectors 110 are not directly linked with one another, but rather are each linked through central control unit 104 and transmit/receive data therewith.

In procedure 292, an activated (hit) laser detector requests detection timestamps from each other activated (hit) laser detector, via direct communication links between the (hit) laser detectors. With reference to Figure 1, if laser detectors 110 are configured synchronously (i.e., such that each laser detector 110 is directly linked with every other laser detector 110 of LTWS 100), then an activated laser detector 110 sends a direct request to every other activated laser detector 110 to obtain the timestamp of its most recent laser radiation detection. Each hit laser detector 110 includes timing information that signifies when exactly the radiation was initially detected (i.e., a "detection timestamp"), and which is recorded by the laser detector 110 upon activation. For example, each hit laser detector 110 includes an internal clock synchronized with central control unit 104, which is used to track the timing of detected radiation.

In procedure 293, a central control unit requests detection timestamps from each activated hit laser detector, via communication links between the hit laser detectors and the central control unit. With reference to Figure 1, if laser detectors 110 are configured asynchronously (i.e., such that each laser detector 110 is only directly linked with central control unit 104), then central control unit 104 sends a direct request to every activated laser detector 110 to obtain the detection timestamp of its most recent laser radiation detection.

In procedure 294, it is determined at which of the activated (hit) laser detectors the incoming laser radiation arrived first, based on all of the detection timestamps. With reference to Figures 1 and 2, first arrival mechanism 132 receives all of the detection timestamps from detector module 106 (synchronous configuration) or from central control unit 104 (asynchronous configuration). First arrival mechanism 132 analyzes all of the detection timestamps and determines at which activated laser detector 110 (i.e., at which sensor unit 102) the incoming laser radiation arrived first, based on which laser detector 110 has the earliest detection timestamp.

In procedure 295, the angle of arrival of the incoming threat is determined from the angle of arrival laser detector at the sensor unit of the first arrival (hit) laser detector. With reference to Figures 1 and 2, central control unit 104 receives data associated with the angle of arrival of the detected laser radiation from angle of arrival laser detector 116 of the sensor unit 102 at which the laser radiation was determined to have arrived first. Central control unit 104 determines the angle of arrival of the incoming threat, and LTWS 100 proceeds to determine additional information associated with the threat (e.g., power discrimination, wavelength discrimination, and the like), and to implement an appropriate countermeasure. It is appreciated that a synchronous configuration of detector modules 108 enables quicker determination of the first arrival laser detector 110 as compared to an asynchronous configuration.

In accordance with an embodiment of the disclosed technique, LTWS 100 determines the priorities for responding to multiple threats received simultaneously, by considering the arrival times and other parameters of the received laser radiation. Central control unit 104 receives timing data from hit laser detectors 110 of each activated sensor unit 102, power data from power laser detectors 112 of each activated sensor unit 102, wavelength data from spectral laser detectors 114 of each activated sensor unit 102, and angle of arrival data from angle of arrival laser detectors 116 of each activated sensor unit 102. Central control unit 104 analyzes all the data and applies relative weights to the various parameters using an appropriate algorithm. For example, the analyzed data may include the following parameters for each respective threat: which sensor unit 102 detected the laser radiation, which hit laser detectors 110 in the sensor unit 102 detected the laser radiation, the laser radiation power, the laser radiation wavelength, the laser radiation angle of arrival, the threat type, the arrival time, and the like. These parameters are input into the algorithm, with different weights (i.e., corresponding to its relative importance) assigned to each parameter category, to produce an overall characterization of that threat. Central control unit 104 may also utilize additional relevant information in the algorithm, such as predefined data and/or real-time data received from other components of LTWS 100 (e.g., an indication from temporal mapping mechanism 130 whether the detected radiation corresponds to an actual threat). The threat characterization includes determining which threat will arrive first based on the received timestamp information, and further includes determining the relative direction of each incoming threat with respect to armored military vehicle 140 based on the angle of arrival data received from the respective (angle of arrival) laser detectors 116. Central control unit 104 determines which of the incoming threats LTWS 100 should optimally respond to first, based on the results of the analysis of all the received data parameters (appropriately weighted using the algorithm). Central control unit 104 may conclude that the incoming threat that is expected to arrive first should also be dealt with first, although this is not always the case. For example, if a threat type of greater severity or potential danger is expected to arrive shortly after a threat type of lesser severity or potential danger, the threat of greater potential danger may be assigned a higher priority for response. In general, the analysis utilizes all known parameters of the incoming threats, along with any additional relevant information, in order to reach an optimal decision for the respective response priorities. Once the first arrival is determined, LTWS 100 proceeds to determine additional information associated with the incoming threats, and to implement an appropriate countermeasure.

In accordance with another embodiment of the disclosed technique, LTWS 100 may be installed in a different type of military setting (i.e., other than on an armored vehicle), such as in the vicinity of a guard post or station or any other type of military structure, whether stationary or mobile. In accordance with a further embodiment of the disclosed technique, LTWS 100 may be installed in a non-military setting, such as at any general structure or location that is intended to be secured or protected.

## Claims

1. A laser threat warning system (100), configured to detect the presence of laser radiation transmitted by a threat source, said laser warning system comprising:
a plurality of spatially separated laser detectors (106), configured to receive incoming laser radiation, said laser detectors (106) comprising:
at least one impact recognition laser detector (110), configured to detect the presence of said incoming laser radiation, said impact recognition laser detector (110) comprising at least one filter configured to filter out said incoming laser radiation based on filtering criteria selected from the list consisting of: wavelength; and pulse duration; and
at least one spectral laser detector (114), configured to detect the wavelength of said incoming laser radiation;
at least one filtering mechanism (122, 124, 126), configured to filter out noise and irrelevant receptions; and
at least one threat identification mechanism (130, 132), configured to positively identify said threat and determine characteristics of said threat,
**characterized in that** said filtering mechanism comprises:
an adjustable threshold mechanism (122), configured to dynamically adjust a threshold level of at least one of said laser detectors, said threshold level adaptively selected in accordance with ambient light conditions detected by at least one ambient light detector; and
a correlation filtering mechanism (124), configured to determine that said incoming laser radiation is associated with a valid threat source if said laser radiation arrives within a predetermined time interval at said plurality of spatially separated laser detectors, and to determine that said incoming laser radiation results from noise if said laser radiation does not arrive within said predetermined time interval at said plurality of spatially separated laser detectors, and
wherein said threat identification mechanism comprises:
a temporal mapping mechanism (130), configured to generate temporal pulse mappings of input pulses obtained by sampling said incoming laser radiation, each mapping comprising a model of pulse characteristics over time for each input pulse, and further configured to identify and characterize a threat source from which an input pulse originates, by comparing said pulse mappings with a threat database comprising threat information associated with pulse characteristics.

2. The laser threat warning system according to claim 1, wherein said temporal mapping mechanism (130) is configured to determine characteristics of said threat source based on said pulse mappings, said characteristics selected from the list consisting of:
type of laser source;
type of threat;
severity of threat; and
possible enemy sources.

3. The laser threat warning system according to claim 1, further comprising a control unit (104), configured to determine the angle of arrival of an incoming threat from an angle of arrival laser detector (116) at a sensor unit (102) of said determined laser detector at which said incoming laser radiation arrived first.

4. The laser threat warning system according to claim 1, further comprising a control unit (104), configured to determine priorities for responding to multiple incoming threats, by assigning to each of said incoming threats a priority based on parameters of the received radiation associated with the threat.

5. The laser threat warning system according to claim 1, wherein said system is disposed on a structure selected from the list consisting of:
an armored military vehicle;
a guard post;
a military structure; and
a non-military protected structure.

6. The laser threat warning system according to claim 1, wherein said laser detectors further comprises:
at least one power laser detector (112), configured to detect the power of said incoming laser radiation; and
at least one angle of arrival laser detector (116), configured to detect the angle of arrival of said incoming laser radiation.

7. A method for detecting the presence of laser radiation transmitted by a threat source, said method comprising the procedure of:
receiving (202) incoming laser radiation with a plurality of spatially separated laser detectors (106), said laser detectors (106) comprising at least one impact recognition laser detector (110), configured to detect the presence of said incoming laser radiation, said impact recognition laser detector (110) comprising at least one filter configured to filter out said incoming laser radiation based on filtering criteria selected from the list consisting of: wavelength; and pulse duration, said laser detectors (106) further comprising at least one spectral laser detector (114), configured to detect the wavelength of said incoming laser radiation;
filtering (204) out noise and irrelevant receptions using at least one filtering mechanism (122, 124, 126); and
positively identifying (212) said threat source using at least one threat identification mechanism (130, 132),
**characterized in that** said filtering mechanism comprises:
an adjustable threshold mechanism (122), for dynamically adjusting (206) a threshold level of at least one of said laser detectors, said threshold level adaptively selected in accordance with ambient light conditions detected by at least one ambient light detector; and
a correlation filtering mechanism (124), for determining (208) that said incoming laser radiation is associated with a valid threat source if said laser radiation arrives within a predetermined time interval at said plurality of spatially separated laser detectors, and determining that said incoming laser radiation results from noise if said laser radiation does not arrive within said predetermined time interval at said plurality of spatially separated laser detectors, and
wherein said threat identification mechanism comprises:
a temporal mapping mechanism (130), for generating (214) temporal pulse mappings of input pulses obtained by sampling said incoming laser radiation, each mapping comprising a model of pulse characteristics over time for each input pulse, and for identifying and characterizing a threat source from which an input pulse originates, by comparing said pulse mappings with a threat database comprising threat information associated with pulse characteristics.

8. The method according to claim 7, wherein said characteristics of said threat source is selected from the list consisting of:
type of laser source;
type of threat;
severity of threat; and
possible enemy sources.

9. The method according to claim 7, further comprising the procedure of determining the angle of arrival (295) of an incoming threat from an angle of arrival laser detector at a sensor unit of said determined laser detector at which said incoming laser radiation arrived first.

10. The method according to claim 7, further comprising the procedure of determining priorities for responding to multiple incoming threats, by assigning to each of said threats a priority based on parameters of the received radiation associated with the threat.

## Patentansprüche

1. Laserbedrohungswarnungssystem (100), das dafür eingerichtet ist, um das Vorhandensein von Laserstrahlung zu ermitteln, die von einer Bedrohungsquelle übertragen wird, wobei das Laserwarnungssystem umfasst:
eine Vielzahl von räumlich getrennten Laserdetektoren (106), die dafür eingerichtet sind, ankommende Laserstrahlung zu empfangen; wobei die Laserdetektoren (106) umfassen:
zumindest einen aufschlagerkennenden Laserdetektor (110), der dafür eingerichtet ist, um das Vorhandensein der ankommenden Laserstrahlung zu ermitteln, wobei der aufschlagerkennende Laserdetektor (110) zumindest einen Filter umfasst, der dafür eingerichtet ist, um die ankommende Laserstrahlung aufgrund von Filterungskriterien auszufiltern, die aus der Liste ausgewählt sind, die aus Folgendem besteht: Wellenlänge; und Pulsdauer; und
zumindest einen Spektral-Laserdetektor (114), der dafür eingerichtet ist, um die Wellenlänge der ankommenden Laserstrahlung zu ermitteln;
zumindest einen Filtermechanismus (122, 124, 126), der dafür eingerichtet ist, um Lärm und unerhebliche Empfänge auszufiltern; und
zumindest einen Bedrohungserkennungsmechanismus (130, 132), der dafür eingerichtet ist, um die Bedrohung positiv zu erkennen und Merkmale dieser Bedrohung zu bestimmen,
**dadurch gekennzeichnet, dass** der Filtermechanismus umfasst:
einen einstellbaren Schwellenmechanismus (122), der dafür eingerichtet ist, um einen Schwellenwert von zumindest einem der Laserdetektoren dynamisch einzustellen, wobei der Schwellenwert anpassungsfähig in Übereinstimmung mit Umgebungslichtbedingungen ausgewählt wird, die von zumindest einem Umgebungslichtdetektor ermittelt werden; und
einen Korrelationsfiltermechanismus (124), der dafür eingerichtet ist, um zu bestimmen, dass die ankommende Laserstrahlung mit einer gültigen Bedrohungsquelle einhergeht, wenn die Laserstrahlung innerhalb eines vorbestimmten Zeitintervalls an der Vielzahl von räumlich getrennten Laserdetektoren ankommt, und um zu bestimmen, dass die ankommende Laserstrahlung sich aus Lärm ergibt, wenn die Laserstrahlung innerhalb des vorbestimmten Zeitintervalls an der Vielzahl von räumlich getrennten Laserdetektoren nicht ankommt, und
worin der Bedrohungserkennungsmechanismus umfasst:
einen zeitlichen Abbildungsmechanismus (130), der dafür eingerichtet ist, um zeitliche Impulsabbildungen von Eingabeimpulsen zu erzeugen, die durch Abtastung der ankommenden Laserstrahlung erhalten werden, wobei jede Abbildung ein Modell von Impulsmerkmalen im Laufe der Zeit für jeden Eingabeimpuls umfasst, und ferner dafür eingerichtet ist, um eine Bedrohungsquelle, aus welcher ein Eingabeimpuls stammt, zu erkennen und kennzeichnen, indem die Impulsabbildungen mit einer Bedrohungsdatenbank verglichen werden, die Bedrohungsinformationen umfasst, die Impulsmerkmalen zugeordnet sind.

2. Laserbedrohungswarnungssystem nach Anspruch 1, worin der zeitliche Abbildungsmechanismus (130) dafür eingerichtet ist, um Merkmale der Bedrohungsquelle aufgrund von den Impulsabbildungen zu bestimmen, wobei die Merkmale aus der Liste ausgewählt sind, die aus Folgendem besteht:
Typ der Laserquelle;
Typ der Bedrohung;
Schwere der Bedrohung; und
möglichen feindlichen Quellen.

3. Laserbedrohungswarnungssystem nach Anspruch 1, ferner umfassend eine Steuereinheit (104), die dafür eingerichtet ist, um den Ankunftswinkel einer ankommenden Bedrohung von einem Ankunftswinkel-Laserdetektor (116) an einer Sensoreinheit (102) des bestimmten Laserdetektors, an dem die ankommende Laserstrahlung zuerst ankam, zu bestimmen.

4. Laserbedrohungswarnungssystem nach Anspruch 1, ferner umfassend eine Steuereinheit (104), die dafür eingerichtet ist, um Prioritäten für das Ansprechen auf mehrfache ankommende Bedrohungen zu bestimmen, indem jeder der ankommenden Bedrohungen eine Priorität aufgrund von Parametern der erhaltenen Strahlung, die der Bedrohung zugeordnet ist, zugeteilt wird.

5. Laserbedrohungswarnungssystem nach Anspruch 1, worin das System auf einer Struktur angeordnet wird, die aus der Liste ausgewählt ist, die aus Folgendem besteht:
einem gepanzerten Militärfahrzeug;
einem Wachposten;
einer Militärstruktur; und
einer geschützten Nicht-Militärstruktur.

6. Laserbedrohungswarnungssystem nach Anspruch 1, worin die Laserdetektoren ferner umfassen:
zumindest einen Leistungs-Laserdetektor (112), der dafür eingerichtet ist, um die Leistung der ankommenden Laserstrahlung zu ermitteln; und
zumindest einen Ankunftswinkel-Laserdetektor (116), der dafür eingerichtet ist, um den Ankunftswinkel der ankommenden Laserstrahlung zu ermitteln.

7. Verfahren zum Ermitteln des Vorhandenseins von Laserstrahlung, die von einer Bedrohungsquelle übertragen wird, worin das Verfahren den Vorgang umfasst:
Empfangen (202) ankommender Laserstrahlung mit einer Vielzahl von räumlich getrennten Laserdetektoren (106), wobei die Laserdetektoren (106) zumindest einen aufschlagerkennenden Laserdetektor (110) umfassen, der dafür eingerichtet ist, um das Vorhandensein der ankommenden Laserstrahlung zu ermitteln, wobei der aufschlagerkennende Laserdetektor (110) zumindest einen Filter umfasst, der dafür eingerichtet ist, um die ankommende Laserstrahlung aufgrund von Filterungskriterien auszufiltern, die aus der Liste ausgewählt sind, die aus Folgendem besteht: Wellenlänge; und Pulsdauer; und die Laserdetektoren (106) ferner zumindest einen Spektral-Laserdetektor (114) umfassen, der dafür eingerichtet ist, um die Wellenlänge der ankommenden Laserstrahlung zu ermitteln;
Ausfiltern (204) des Lärms und unerheblicher Empfänge unter Verwendung zumindest eines Filtermechanismus (122, 124, 126); und
positives Erkennen (212) der Bedrohungsquelle unter Verwendung zumindest eines Bedrohungserkennungsmechanismus (130, 132),
**dadurch gekennzeichnet, dass** der Filtermechanismus umfasst:
einen einstellbaren Schwellenmechanismus (122) für das dynamische Einstellen (206) eines Schwellenwerts von zumindest einem der Laserdetektoren, wobei der Schwellenwert anpassungsfähig in Übereinstimmung mit Umgebungslichtbedingungen ausgewählt wird, die von zumindest einem Umgebungslichtdetektor ermittelt werden; und
einen Korrelationsfiltermechanismus (124) für das Bestimmen (208), dass die ankommende Laserstrahlung mit einer gültigen Bedrohungsquelle einhergeht, wenn die Laserstrahlung innerhalb eines vorbestimmten Zeitintervalls an der Vielzahl von räumlich getrennten Laserdetektoren ankommt, und für das Bestimmen, dass die ankommende Laserstrahlung sich aus Lärm ergibt, wenn die Laserstrahlung innerhalb des vorbestimmten Zeitintervalls an der Vielzahl von räumlich getrennten Laserdetektoren nicht ankommt; und
worin der Bedrohungserkennungsmechanismus umfasst:
einen zeitlichen Abbildungsmechanismus (130) für das Erzeugen (214) zeitlicher Impulsabbildungen von Eingabeimpulsen, die durch Abtastung der ankommenden Laserstrahlung erhalten werden, wobei jede Abbildung ein Modell von Impulsmerkmalen im Laufe der Zeit für jeden Eingabeimpuls umfasst, und für das Erkennen und Kennzeichnen einer Bedrohungsquelle, aus welcher ein Eingabeimpuls stammt, indem die Impulsabbildungen mit einer Bedrohungsdatenbank verglichen werden, die Bedrohungsinformationen umfasst, die Impulsmerkmalen zugeordnet sind.

8. Verfahren nach Anspruch 7, worin die Merkmale der Bedrohungsquelle aus der Liste ausgewählt sind, die aus Folgendem besteht:
Typ der Laserquelle;
Typ der Bedrohung;
Schwere der Bedrohung; und
möglichen feindlichen Quellen.

9. Verfahren nach Anspruch 7, ferner umfassend den Vorgang des Bestimmens des Ankunftswinkels (295) einer ankommenden Bedrohung von einem Ankunftswinkel-Laserdetektor an einer Sensoreinheit des bestimmten Laserdetektors, an dem die ankommende Laserstrahlung zuerst ankam.

10. Verfahren nach Anspruch 7, ferner umfassend den Vorgang des Bestimmens von Prioritäten für das Ansprechen auf mehrfache ankommende Bedrohungen, indem jeder der Bedrohungen eine Priorität aufgrund von Parametern der erhaltenen Strahlung, die der Bedrohung zugeordnet ist, zugeteilt wird.

## Revendications

1. Système d'avertissement de menace laser (100), configuré pour détecter la présence d'un rayonnement laser transmis par une source menaçante, ledit système d'avertissement laser comprenant :
une pluralité de détecteurs laser (106) séparés dans l'espace, configurés pour recevoir un rayonnement laser en entrée, lesdits détecteurs laser (106) comprenant :
au moins un détecteur laser de reconnaissance d'impact (110), configuré pour détecter la présence dudit rayonnement laser en entrée, ledit détecteur laser de reconnaissance d'impact (110) comprenant au moins un filtre configuré pour filtrer ledit rayonnement laser en entrée sur la base de critères de filtrage sélectionnés de la liste composée de : longueur d'onde; et durée d'impulsion ; et
au moins un détecteur laser spectral (114), configuré pour détecter la longueur d'onde dudit rayonnement laser en entrée ;
au moins un mécanisme de filtrage (122, 124, 126), configuré pour filtrer le bruit et les réceptions non pertinentes ; et
au moins un mécanisme d'identification de menaces (130, 132), configuré pour identifier positivement ladite menace et déterminer des caractéristiques de ladite menace,
**caractérisé en ce que** ledit mécanisme de filtrage comprend :
un mécanisme de seuil réglable (122), configuré pour régler de façon dynamique un niveau de seuil d'au moins un desdits détecteurs laser, ledit niveau de seuil étant choisi de façon adaptative selon des conditions de lumière ambiante détectées par au moins un détecteur de lumière ambiante ; et
un mécanisme de filtrage par corrélation (124) configuré pour déterminer que ledit rayonnement laser en entrée est associé à une source menaçante valide si ledit rayonnement laser arrive dans un intervalle de temps prédéterminé au niveau de ladite pluralité des détecteurs laser séparés dans l'espace, et pour déterminer que ledit rayonnement laser en entrée dérive du bruit si ledit rayonnement laser n'arrive pas dans ledit intervalle de temps prédéterminé au niveau de ladite pluralité de détecteurs laser séparés dans l'espace, et
où ledit mécanisme d'identification de menaces comprend :
un mécanisme de mappage temporel (130), configuré pour générer des mappages d'impulsions temporelles pour les impulsions d'entrée obtenues par l'échantillonnage dudit rayonnement laser en entrée, chaque mappage comprenant un modèle de caractéristiques d'impulsions dans le temps pour chaque impulsion d'entrée, et configuré en autre pour identifier et caractériser une source menaçante de laquelle provient une impulsion d'entrée, par comparaison desdits mappages d'impulsions avec une base de données de menaces associée avec les caractéristiques d'impulsions.

2. Système d'avertissement de menace laser selon la revendication 1, où ledit mécanisme de mappage temporel (130) est configuré pour déterminer les caractéristiques de ladite source menaçante sur la base desdits mappages d'impulsions, lesdites caractéristiques sélectionnées de la liste composée de :
type de source laser ;
type de menace ;
gravité de la menace ; et
sources ennemies possibles.

3. Système d'avertissement de menace laser selon la revendication 1, comprenant en outre une unité de commande (104), configurée pour déterminer l'angle d'arrivée d'une menace en entrée à partir d'un détecteur laser d'angle d'arrivée (116) au niveau d'une unité capteur (102) dudit détecteur laser déterminé au niveau de laquelle ledit rayonnement laser en entrée est arrivé en premier.

4. Système d'avertissement de menace laser selon la revendication 1, comprenant en autre une unité de commande (104) configurée pour déterminer des priorités de réponse à plusieurs menaces en entrée, en assignant à chacune desdites menaces en entrée une priorité basée sur des paramètres du rayonnement reçu associé à la menace.

5. Système d'avertissement de menace laser selon la revendication 1, où ledit système est placé sur une structure choisie de la liste composée de :
un véhicule militaire blindé ;
un poste de garde ;
une structure militaire ; et
une structure protégée non militaire.

6. Système d'avertissement de menace laser selon la revendication 1, où lesdits détecteurs laser comprennent en autre :
au moins un détecteur laser de puissance (112), configuré pour détecter la puissance dudit rayonnement laser en entrée ; et
au moins un détecteur laser d'angle d'arrivée (116), configuré pour détecter l'angle d'arrivée dudit rayonnement laser en entrée.

7. Méthode de détection de la présence d'un rayonnement laser transmis par une source menaçante, ladite méthode comprenant la procédure de :
recevoir (202) un rayonnement laser en entrée
avec une pluralité de détecteurs (106) laser séparés dans l'espace, lesdits détecteurs laser (106) comprenant au moins une détecteur laser de reconnaissance d'impact (110), configurés pour détecter la présence dudit rayonnement laser en entrée, ledit détecteur laser de reconnaissance d'impact (110) comprenant au moins une filtre configuré pour filtrer ledit rayonnement laser en entrée sur la base de critères de filtrage sélectionnés de la liste composée de : longueur d'onde ; et durée d'impulsion, lesdits détecteurs laser (106) comprenant en autre au moins une détecteurs laser spectral (114) configuré pour détecter la longueur d'onde dudit rayonnement laser en entrée ;
filtrer (204) le bruit et les réceptions non pertinentes en utilisant au moins un mécanisme de filtrage (122, 124, 126) ; et
identifier (212) positivement ladite source menaçante en utilisant au moins un mécanisme d'identification de menaces (130, 132),
**caractérisée en ce que** ledit mécanisme de filtrage comprend :
un mécanisme de seuil réglable (122), pour régler (206) de façon dynamique un niveau de seuil d'au moins un desdits détecteurs laser, ledit niveau de seuil étant choisi de façon adaptative selon des conditions de lumière ambiante détectées par au moins un détecteur de lumière ambiante ; et
un mécanisme de filtrage par corrélation (124) pour déterminer (208) que ledit rayonnement laser en entrée est associé à une source menaçante valide si ledit rayonnement laser arrive dans un intervalle de temps prédéterminé au niveau de ladite pluralité des détecteurs laser séparés dans l'espace, et pour déterminer que ledit rayonnement laser en entrée dérive du bruit si ledit rayonnement laser n'arrive pas dans ledit intervalle de temps prédéterminé au niveau de ladite pluralité de détecteurs laser séparés dans l'espace, et
où ledit mécanisme d'identification de menaces comprend :
un mécanisme de mappage temporel (130) pour générer (214) des mappages d'impulsions temporelles pour les impulsions d'entrée obtenues par l'échantillonnage dudit rayonnement laser en entrée, chaque mappage comprenant un modèle de caractéristiques d'impulsions dans le temps pour chaque impulsion en entrée, et pour identifier et caractériser une source menaçante de laquelle provient une impulsion d'entrée, par comparaison desdits mappages d'impulsions avec une base de données de menaces associée avec les caractéristiques d'impulsions.

8. Méthode selon la revendication 7, où lesdites caractéristiques de ladite source menaçante sont sélectionnées de la liste composée de :
type de source laser ;
type de menace ;
gravité de la menace ; et
sources ennemies possibles.

9. Méthode selon la revendication 7, comprenant en outre la procédure de détermination de l'angle d'arrivée (295) d'une menace en entrée à partir d'un détecteur laser d'angle d'arrivée au niveau d'une unité capteur dudit détecteur laser déterminé au niveau de laquelle ledit rayonnement laser en entrée est arrivé en premier.

10. Méthode selon la revendication 7, comprenant en autre la procédure de détermination des priorités de réponse à plusieurs menaces en entrée, en assignant à chacune desdites menaces une priorité basée sur des paramètres du rayonnement reçu associé à la menace.
